# EUROPÄISCHE PATENTSCHRIFT

(11) **EP 2 255 977 B1**
(45) Veröffentlichungstag und Bekanntmachung des Hinweises auf die Patenterteilung: **20.03.2013**
(21) Anmeldenummer: 10162476.5
(22) Anmeldetag: 11.05.2010
(51) Int. Cl.: F16D 1/076, B60B 27/00, B21K 1/30

(54) **Verfahren zur Ausprägung einer Stirnverzahnung**
Method for forming a front cogging
Procédé d'imprégnation d'une dentelure frontale

(30) Priorität: 28.05.2009 DE 102009023042
(43) Veröffentlichungstag der Anmeldung: 01.12.2010
(73) Patentinhaber: Schaeffler Technologies AG & Co. KG, 91074 Herzogenaurach (DE)
(72) Erfinder: Langer, Roland, 97523, Schwanfeld (DE); Lorenz, Sebastian, 08237, Rothenkirchen (DE); Niebling, Peter, 97688, Bad Kissingen (DE)

(56) Entgegenhaltungen:
- EP-A2- 2 042 755
- DE-A1- 3 604 630
- DE-A1- 3 636 243
- DE-A1-102005 018 127
- DE-A1-102008 004 924

## Beschreibung

### Gebiet der Erfindung

Die Erfindung betrifft ein Verfahren zur Ausprägung einer Stirnverzahnung aus einem Wälznietbund eines Wälzlagers, insbesondere Radlager. Ferner betrifft die Erfindung ein Wälzlager, beziehungsweise Radlager, mit entsprechendend angeformter Stirnverzahnung.

### Hintergrund der Erfindung

Ein derartiges Verfahren kommt insbesondere auf dem Automobilsektor bei der Herstellung von Radlagern zum Einsatz.

In der Vergangenheit hat sich herausgestellt, dass ein Radlager, aber auch andere Wälzlager mit Wälznietbund, vorteilhafterweise über eine Stirnverzahnung mit dem antreibenden Element des Antriebsstranges verbunden werden können, um Bauraum einzusparen oder eine Passungsproblematik einer Radialverzahnung zu umgehen.

Aus US 20010046339 A1 ist ein Verfahren zur Umformung eines Endstückes einer Radnabe bekannt, wobei das Endstück in einen Wälznietbund umgeformt wird. Während der Wälznietbund durch einen sogenannten Döpper geformt wird, wird eine unnötige Aufweitung des Innenrings dadurch vermieden, dass dieser radial von außen nach innen von einer Stütze abgestützt ist.

Mithilfe des Döpperverfahrens lässt sich das Endstück einer Radnabe axial und radial verformen. Dabei werden Zähne ausgebildet, die in axialer Richtung ausgerichtet sind und einen Verzahnungskreis um die Rotationsachse bilden. Ein derartiges Verfahren sowie ein entsprechendes Radlager mit einem stirnverzahten Wälznietbund geht aus WO2006105748A1 hervor.

Die DE 36 36 243 A1 stellt gattungsbildenden Stand der Technik dar. Es werden Herstellungsverfahren gelehrt, die auf der Basis einer Vernietung mittels eines Wälznietkopfsetzers an Radlagereinheiten appliziert werden können. Dabei taumelt eine radial begrenzende Hülse mit dem Wälznietkopfsetzer während dessen Taumelbewegung mit, ohne die Dichtungsanordnungen auf dem Innenring zu beschädigen.

Aus DE 10 2005 018 127 A1 und EP 2 042 755 A2 sind ebenfalls Radlagereinheiten mit stirnverzahntem Wälznietbund bekannt, wobei die erstgenannte einen Fokus auf eine qualitativ hochwertige Strinverzahnung legt und dazu Formverfahren anbietet.

Die Zahntiefe der Stirnverzahnung ist eine entscheidende Größe, wenn es um die axiale Übertragung hoher Drehmomente geht. Je größer die Zahntiefe ist, desto größer ist das maximal zu übertragende Drehmoment. Jedoch stößt das Döpperverfahren an seinen Grenzen, wenn es gilt eine Vielzahl dünner Zähne mit einer großen Zahntiefe zu schaffen. Aufgrund der Taumelbewegung des Döppers kann zwar eine Zahnsenke aktiv geformt werden, jedoch ist die Spitze des Zahnes nur schwer formbar, da die Materialflußrichtung der Krafteinwirkung entgegengerichtet ist und der zu formende Wälznietbund sich einer Vergrößerung seiner Oberfläche entgegensetzt.

Ferner hat sich in der Praxis herausgestellt, dass das Döpperverfahren oft zu einer ungleich ausgeformten Stirnverzahnung führt, bei der der Eingriff in die Gegenverzahnung für eine gleichmäßige Drehmomentübertragung nicht immer ausreichend passgenau ist.

### Zusammenfassung der Erfindung

Der Erfindung liegt die Aufgabe zu Grunde, ein Verfahren zur Ausprägung einer Stirnverzahnung und ein Wälzlager mit einer Stirnverzahnung anzugeben, wobei die vorgenannten Nachteile vermieden werden.

Diese Aufgabe wird durch ein Verfahren mit den im Anspruch 1 angegebenen Merkmalen gelöst.

Ferner wird diese Aufgabe durch ein Wälzlager mit den im Anspruch 6 angegebenen Merkmalen gelöst.

Das erfindungsgemäße Verfahren zur Ausprägung einer Stirnverzahnung aus einem Wälznietbund eines Wälzlagers, insbesondere Radlager, weist wenigstens folgende Schritte auf:
a) In einem ersten Schritt wird vor der endgültigen Umformung eines Endstückes der Nabe des Wälzlagers, beispielsweise nach einer formgebenden Vorbehandlung des Endstückes (sogenanntes Auftulpen) oder an das nicht vorbehandelte Endstück eine Matrize am Wälzlager in einem vormontierten Zustand axial angeordnet. Bei dem Endstück kann es sich beispielsweise um das hohlzylindrische Ende einer Radnabe handeln, die durch den Döpper sowohl axial als auch radial verformt werden soll. Bei der Nabe des Wälzlagers handelt es sich um den drehbaren Teil des Wälzlagers, an welchem im Falle des Radlagers der Radflansch angeformt ist.
   Vormontierter Zustand bedeutet in diesem Zusammenhang, dass die Nabe, der oder die Innenringe, der oder die Außenringe und auch die Wälzkörper bereits in betriebsgemäßer Weise zueinander angeordnet sind und durch eine Kaltumformung des Wälznietbundes endgültig zu einer Wälzlagereinheit zusammengeführt werden sollen.
b) In einem zweiten Schritt während der Umformung des Endstückes des Nabe und der gleichzeitigen Ausformung der Stirnverzahnung begrenzt die Matrize eine radiale Ausdehnung des sich bildenden Wälznietbundes. Dabei wird die Wälzlagereinheit zur axialen Sicherung des Innenrings durch den sich bildenden Wälznietbund vorgespannt.

Bei der Matrize handelt es sich um ein Instrument, welches schablonenartig im Sinne einer Begrenzung verwendet wird, um die radiale Ausdehnung während der Kaltumformung einzuschränken. Damit wird der Materialfluss des Wälznietbundes bei der Kaltumformung verstärkt in axialer Richtung umgeleitet. Somit kommt die Formgebung durch den Döpper, dessen Kraftwirkung dem Materialfluss entgegen gerichtet ist, wesentlich besser zum Tragen. Die Zähne der Stirnverzahnung lassen sich präziser formen. Es sind auch Formen möglich, z.B. eine größere axiale Zahnhöhe, die ohne Matrize nicht erzielbar sind.

Vorteilhafterweise formt die Matrize eine axiale und/oder radiale Außenfläche des Wälznietbundes. Neben der Funktion der radialen Begrenzung durch die Matrize, kann selbige auch zur Formgebung des Wälznietbundes verwendet werden. Dies kann beispielsweise an der zylindrischen Außenfläche der Fall sein, oder auch bei einer axialen Außenfläche des Wälznietbundes. Damit ist es möglich eine sehr hohe Gestaltungsfreiheit zu erzielen und vorteilhafterweise für eine gewünschte Form des Wälznietbundes auszunutzen. Die Matrize und der Döpper können deratig zusammenwirken, dass der gewünschte Materialfluss eintritt. Das Ergebnis wird umso formgenauer, wenn durch die Matrize und den Döpper jede mögliche Ausbreitung des Materialverlustes kontrollierbar wird und sich der Verformungsdruck auf den sich bildenden Wälznietbund erhöht.

Vorteilhafterweise formt und begrenzt ein Innenfortsatz der Matrize die radiale Außenfläche des Wälznietbundes. Wird der Innerenfortsatz als begrenzendes Element verwendetet, ist es sinnvoll verschiedene Innenfortsätze für verschiedene vorgegebene Formen des Wälznietbundes vorzusehen, wobei die Innenfortsätze in die Matrize einsetzbar sind.

Vorteilhafterweise stützt ein Klemmring den Innenring des Wälzlagers während der Umformung (zweiter Schritt) radial von außen nach innen ab. Ein derartiger Klemmring verhindert das nachteilige Aufweiten des Innenringes in radialer Richtung während des Döpperns.

Vorteilhafterweise ist der Klemmring an der Matrize befestigt oder ist einstückig mit dieser verbunden. Mit einer einstückigen Ausführung ist es möglich in einem Arbeitsschritt, nämlich beim Anordnen der Matrize am vormontierten Wälzlager, auch gleichzeitig die radiale Abstützung des Innenrings zu gewährleisten.

Das erfindungsgemäße Wälzlager, insbesondere Radlager, mit einem Wälznietbund mit angeformter Stirnverzahnung, wobei der Wälznietbund an einer radialen Außenfläche während der Bildung des Wälznietbundes radial begrenzt und/oder geformt worden ist, weist eine gleichmäßige Verzahnungsausprägung aus und ist wegen einer optimierten Verzahnungstiefe für eine Übertragung eines hohen Drehmoments einsetzbar.

Vorteilhafterweise wird beim Wälznietvorgang die Außenfläche des Wälznietbundes ringförmig, konusförmig oder in ähnlicher Weise geformt. Der Wälznietbund kann nun in einer für das Wälzlager vorteilhaften Weise geformt werden. Beispielsweise in der Art, dass dieser die Dichtfunktion einer Dichtungsanordung unterstützt, oder einen Dichtungsspalt mit einem anderen Bauteil, z.B. einer Gelenkglocke bildet.

Vorteilhafterweise weist die Außenfläche des Wälznietbundes einer sich umfänglich fortsetzenden, insbesondere sich wiederholenden, Einprägung auf. Damit kann der Wälznietbund beispielsweise zum Aufbringen von Informationen dienen, z.B. für Herstellerangaben, Seriennummer, Spezifikationen oder Warenkennzeichen.

Vorteilhafterweise ist die sich umfänglich fortsetzende Einprägung als Endcoder ausgebildet. Hiermit wird eine Bauteilintegration vollzogen, die herstellungstechnisch sehr effizient ist und zu einem stabilen Geberrad führt. Normalerweise müssen Encoder als separates Bauteil, welches einen separaten Herstellungsschritt erfordert, eingesetzt werden. Dieser Schritt ist nun nicht mehr notwendig. Außerdem kann sich der Encoder relativ zum Sensor einer Drehzahlmessvorrichtung nicht axial entfernen. Damit wird eine sehr zuverlässige Drehzahlmessung gewährleistet.

Vorteilhafterweise ist die Außenfläche des Wälznietbundes zumindest teilweise als Sitz für einen Encoder oder ein Dichtungselement vorgesehen. Die Außenfläche kann so gestaltet werden, dass sie für das jeweilige Bauteil optimal ist. Dies kann beispielsweise durch eine im Wesentlichen glatte Außenfläche kraftschlüssig oder auch durch eine Außenfläche mit in das jeweilige Bauteil eingreifenden Elementen formschlüssig gewährleistet sein.

Weitere vorteilhafte Ausbildungen bevorzugte Weiterbildungen der Erfindung sind der Figurenbeschreibung und/oder den Unteransprüchen zu entnehmen.

### Beschreibung der Zeichnungen

Es zeigen:
- Fig. 1: eine vormontierte Radlagereinheit im Längsschnitt mit Matrize vor dem Wäznietvorgang,
- Fig. 2: eine vormontierte Radlagereinheit im Längsschnitt mit Matrize nach dem Wäznietvorgang.

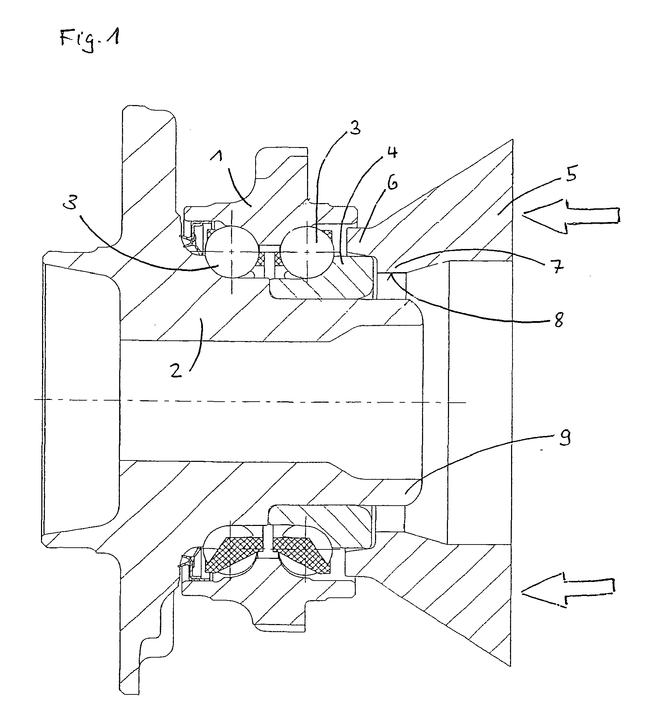

Fig. 1 zeigt eine vormontierte Radlagereinheit der dritten Generation im Längsschnitt mit einer Matrize 5 vor dem Wäznietvorgang in einem ersten Schritt des Verfahrens zur Ausprägung einer Stirnverzahnung.

Das verformbare, zylindrische Endstück 9 der Radnabe 2 soll im anstehenden Wälznietvorgang kalt umgeformt werden. Dazu wird die Matrize 5 an der vormontierten Radlagereinheit so angeordnet, dass eine Formfläche 8 des Innenfortsatzes 7 zur radialen Begrenzung und Formung des Wälznietbundes einsetzbar ist. Die Formfläche 8 ist zylindrisch, womit dem Wälznietbund eine ebenfalls zylindrische Form gegeben werden kann. die Formfläche 8 könnte aber auch zwecks einer besseren Ausformung konisch gestaltet sein.

Der Innenfortsatz 7 ist einstückig mit der Matrize 5 ausgeführt, womit das Verfahren in der Durchfürhung einfach gehalten werden kann.

Vorteilhafterweise ist der Klemmring 6 auch einstückig mit der Matrize 5 ausgebildet und radial innenseitig konisch ausgeführt. Die Konizität etabliert die radiale Stützung des Innenrings 4 derart, dass durch eine erhöhte axiale Vorspannkraft (in Pfeilrichtung) auch die radiale Stützkraft reguliert werden kann.

Vorteilhafterweise werden der Außenring 1 und die Wälzkörper der Wälzkörperreihen 3 nicht in die Kraftübertragung eingebunden, woduch an diesen Teilen keine Beschädigung während des Wälznietvorganges entstehen kann.

Alternativ kann die Formfläche 8 alle möglichen gewünschten Formen aufweisen, die dem Wälznietbund aufgeprägt werden können. Aufgrund der-Zentrierung der Matrize 5 mittels des Innenrings 4 wird zusätzlich der Radialschlag der Stirnverzahnung verbessert.

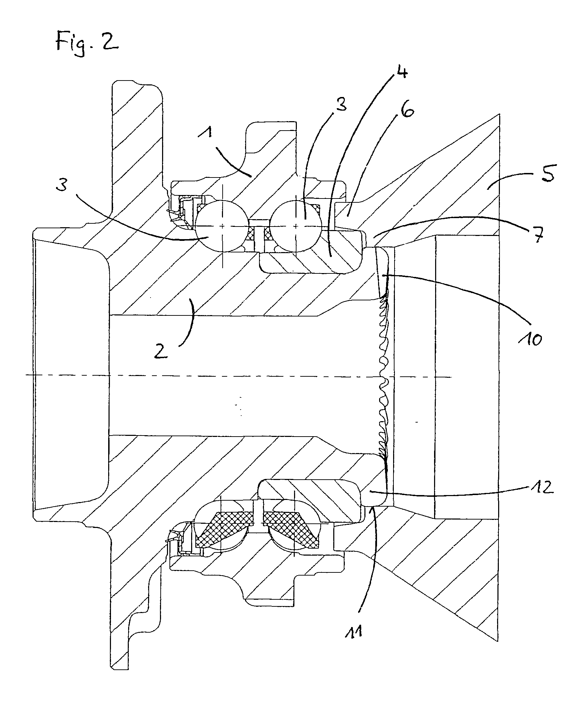

Fig. 2 zeigt eine vormontierte Radlagereinheit im Längsschnitt mit Matrize 5 nach dem Wälznietvorgang.

Nach der Kaltumformung ist die Ausprägung der Stirnverzahnung 10 vollendet. Die radiale Außenfläche 11 des Wälznietbundes 12 hat die zylindrische Form der Formfläche 8 (bezeichnet in Fig. 1) angenommen.

Die Matrize 5 kann nun in axialer Richtung abgenommen werden, da der Wälznietbund 12 die Vorspannung der Wälzkörper über die Lagerringe 1,4 und die Radnabe 2 aufrechterhält.

Zusammenfassend betrifft die Erfindung ein Verfahren zur Ausprägung einer Stirnverzahnung eines Wälzlagers, insbesondere Radlager. Ziel ist es die Gleichmäßigkeit der Stirnverzahnung zu verbessern und eine größere Zahntiefe zu ermöglichen. Dies wird durch zwei Verfahrensschritte erreicht, indem in einem ersten Schritt vor der Umformung eines Endstückes einer Nabe eine Matrize an das Wälzlager in einem vormontierten Zustand axial angeordnet wird und in einem zweiten Schritt während der Umformung des Endstückes und der Ausformung der Stirnverzahnung die Matrize eine radiale Ausnehmung des sich bildenen Wälznietbundes radial begrenzt wird. Zusätzlich wird durch die Matrize die radiale Innenringaufweitung reduziert beziehungsweise verhindert.

### Bezugszeichenliste

- 1: Außenring
- 2: Radnabe
- 3: Wälzkörperreihe
- 4: Innenring
- 5: Matrize
- 6: Klemmring
- 7: Innenfortsatz
- 8: Formfläche
- 9: verformbares, zylindrisches Endstück
- 10: Stirnverzahnung
- 11: Außenfläche des Wälznietbundes
- 12: Wälznietbund

## Patentansprüche

1. Verfahren zur Ausprägung einer Stirnverzahnung (10) aus einem Wälznietbund (12) eines Wälzlagers, insbesondere Radlager, wobei
- in einem ersten Schritt vor der Umformung eines Endstückes (9) einer Nabe (2) eine Matrize (5) an das Wälzlager in einem vormontierten Zustand axial angeordnet wird und
- in einem zweiten Schritt während der Umformung des Endstückes (9) und der gleichzeitigen Ausformung der Stirnverzahnung (7) die Matrize (5) eine radiale Ausdehnung des sich bildenden Wälznietbundes (12) radial begrenzt, **dadurch gekennzeichnet, dass** zwischen dem ersten und zweiten Schritt die Matrize (5) mittels eines Innenringes (4) des Wälzlagers zentriert wird.

2. Verfahren nach Anspruch 1, wobei die Matrize (5) eine axiale und/oder radiale Außenfläche (11) des Wälznietbundes (12) formt.

3. Verfahren nach Anspruch 2, wobei ein Innenfortsatz (7) der Matrize (5) die radiale Außenfläche (11) des Wälznietbundes (12) formt und begrenzt.

4. Verfahren nach einem der vorhergehenden Ansprüche, wobei ein Klemmring (6) einen Innenring (4) des Wälzlagers während des zweiten Schrittes radial von außen nach innen abstützt.

5. Verfahren nach Anspruch 4, wobei der Klemmring (6) an der Matrize (5) befestigt wird oder einstückig mit dieser verbunden ist.

6. Wälzlager, insbesondere Radlager, mit einem Wälznietbund (12) mit angeformter Stirnverzahnung (10), wobei der Wälznietbund (12) an einer radialen Außenfläche (11) während der Bildung des Wälznietbundes (12) radial begrenzt und/oder geformt worden ist, **dadurch gekennzeichnet, dass** die Außenfläche (11) des Wälznietbundes (12) eine sich umfänglich fortsetzende, insbesondere sich wiederholende, Einprägung aufweist.

7. Wälzlager nach Anspruch 6, wobei die Außenfläche (11) des Wälznietbundes (12) ringförmig, konusförmig oder in ähnlicher Weise geformt ist.

8. Wälzlager nach Anspruch 6, wobei der Wälznietbund (12) zum Aufbringen von Informationen, insbesondere für Herstellerangaben, Seriennummer, Spezifikationen oder Warenkennzeichen, dient.

9. Wälzlager nach Anspruch 6, wobei die sich umfänglich fortsetzende Einprägung als Encoder ausgebildet ist.

10. Wälzlager nach Anspruch 6, wobei die Außenfläche (11) zumindest teilweise als Sitz für einen Encoderring oder ein Dichtungselement vorgesehen ist.

## Claims

1. Method for forming an end-side toothing arrangement (10) from a rolling rivet collar (12) of a rolling bearing, in particular a wheel bearing, wherein
- in a first step before the reshaping of an end piece (9) of a hub (2), a die (5) is axially arranged on the rolling bearing in a preassembled state and
- in a second step during the reshaping of the end piece (9) and the simultaneous shaping of the end-side toothing arrangement (7), the die (5) radially delimits a radial expansion of the rolling rivet collar (12) as it forms, **characterized in that** the die (5) is centred by means of an inner ring (4) of the rolling bearing between the first and second step.

2. Method according to Claim 1, wherein the die (5) shapes an axial and/or radial outer face (11) of the rolling rivet collar (12).

3. Method according to Claim 2, wherein an inner extension (7) of the die (5) shapes and delimits the radial outer face (11) of the rolling rivet collar (12).

4. Method according to one of the preceding claims, wherein a clamping ring (6) radially supports from the outside inwards an inner ring (4) of the rolling bearing during the second step.

5. Method according to Claim 4, wherein the clamping ring (6) is fastened to the die (5) or is integrally connected thereto.

6. Rolling bearing, in particular a wheel bearing, with a rolling rivet collar (12) with a molded-on end-side toothing arrangement (10), wherein the rolling rivet collar (12) has been radially delimited and/or shaped on a radial outer face (11) during the formation of the rolling rivet collar (12), **characterized in that** the outer face (11) of the rolling rivet collar (12) has a circumferentially continuing, in particular repeating, embossment.

7. Rolling bearing according to Claim 6, wherein the outer face (11) of the rolling rivet collar (12) is shaped annularly, conically or in a similar manner.

8. Rolling bearing according to Claim 6, wherein the rolling rivet collar (12) is used to attach information, in particular for manufacturer information, serial numbers, specifications or distinctive signs for goods.

9. Rolling bearing according to Claim 6, wherein the circumferentially continuing embossment is embodied as an encoder.

10. Rolling bearing according to Claim 6, wherein the outer face (11) is provided at least in part as a seat for an encoder ring or a sealing element.

## Revendications

1. Procédé de façonnage d'une denture frontale (10) à partir d'une collerette de rivetage orbital (12) d'un palier à roulement, en particulier d'un palier de roue,
- une matrice (5) étant disposée axialement sur le palier à roulement dans un état pré-monté, lors d'une première étape avant le refaçonnage d'une pièce d'extrémité (9) d'un moyeu (2) et
- la matrice (5) limitant radialement une dilatation radiale de la collerette de rivetage orbital (12) se formant, lors d'une deuxième étape pendant le refaçonnage de la pièce d'extrémité (9) et le formage simultané de la denture frontale (7),
**caractérisé en ce que** la matrice (5) est centrée au moyen d'une bague intérieure (4) du palier à roulement entre la première et la deuxième étape.

2. Procédé selon la revendication 1, dans lequel la matrice (5) forme une surface extérieure (11) axiale et/ou radiale de la collerette de rivetage orbital (12).

3. Procédé selon la revendication 2, dans lequel un prolongement intérieur (7) de la matrice (5) forme et limite la surface extérieure radiale (11) de la collerette de rivetage orbital (12).

4. Procédé selon l'une quelconque des revendications précédentes, dans lequel une bague de serrage (6) supporte radialement depuis l'extérieur vers l'intérieur une bague intérieure (4) du palier à roulement pendant la deuxième étape.

5. Procédé selon la revendication 4, dans lequel la bague de serrage (6) est fixée à la matrice (5) ou est reliée d'une seule pièce à celle-ci.

6. Palier à roulement, en particulier palier de roue, comprenant une collerette de rivetage orbital (12) dotée d'une denture frontale formée (10), la collerette de rivetage orbital (12) ayant été limitée radialement et/ou formée sur une surface extérieure radiale (11) pendant la formation de la collerette de rivetage orbital (12), **caractérisé en ce que** la surface extérieure (11) de la collerette de rivetage orbital (12) comprend une empreinte continuant sur la périphérie, en particulier se répétant.

7. Palier à roulement selon la revendication 6, dans lequel la surface extérieure (11) de la collerette de rivetage orbital (12) est formée de manière annulaire, de manière conique ou d'une manière similaire.

8. Palier à roulement selon la revendication 6, dans lequel la collerette de rivetage orbital (12) sert à fournir des informations, en particulier pour des données de constructeur, des numéros de série, des spécifications ou des signes distinctifs pour des marchandises.

9. Palier à roulement selon la revendication 6, dans lequel l'empreinte continuant sur la périphérie est réalisée sous forme de codeur.

10. Palier à roulement selon la revendication 6, dans lequel la surface extérieure (11) est prévue au moins partiellement en tant que logement pour un anneau codeur ou un élément d'étanchéité.
